# EUROPEAN PATENT APPLICATION

(11) **EP 2 439 504 A2**
(43) Date of publication of application: **11.04.2012**
(21) Application number: 11275121.9
(22) Date of filing: 10.10.2011
(51) Int. Cl.: G01G 19/08

(54) **Lifting apparatus and a method of using the same to indicate a load weight.**

(30) Priority: 11.10.2010 GB 1017096; 12.04.2011 GB 1106190
(71) Applicant: Adams, William Mark, Retford, Nottinghamshire DN22 8PT (GB)
(72) Inventor: Adams, William Mark, Retford, Nottinghamshire DN22 8PT (GB)
(74) Representative: Wood, Graham

(57) **Abstract**

The invention relates to apparatus and a method for the determination of the weight of a load of goods in a goods storage area such as a vehicle trailer so as to allow the trailer to be loaded safely and efficiently. The load is moved onto the one or more decks of the storage area via apparatus including a movable platform on which the loads are placed. Weight detection means are provided to allow the weight of the load placed thereon to be determined and processing means are provided to allow the use of the weight data to prevent the overloading of the goods storage area to be prevented and/or the weight of the load on each of the decks to be ensured to be safe and/or the distribution of the load on a floor or deck to be assessed for safety.

## Description

The invention to which this application relates is to lifting apparatus of a type which typically, but not necessarily exclusively is for use for the movement of goods between a goods storage area, such as in the form of a vehicle trailer and a further goods storage area such as in the form of a warehouse so as to allow the loading and/or unloading of the trailer. The invention also relates to a method of ensuring that the weight of the load which is place into the goods storage area does not exceed a safe weight level and/or is distributed in a safe manner in the storage area.

Lifting apparatus which is provided for the movement of goods between a vehicle trailer and a warehouse, is known from the applicant's co-pending applications and other patents. The lifting apparatus is provided to allow the efficient and safe movement of the goods between the two storage areas and different floor levels of the same. The apparatus is typically supported on the ground or a support surface and fills a gap between the open end of the vehicle trailer and the opening or loading bay into the warehouse so as to allow the transfer of goods between the same.

In many instances, the goods storage in the form of the vehicle trailer has a lower deck on which the load is placed and, increasingly, is provided with both a first, lower, deck and a second deck spaced above the first. The lifting apparatus includes a platform which is moveable at least between the height of the two decks and the height of the floor or loading bay of the other storage area in the form of a warehouse. Thus, goods can be moved onto the platform at the required height and then the platform can be moved in a vertical direction to bring the same to the required height of the floor or deck onto which the goods are to be moved from the platform.

Lifting apparatus of the type described therefore provides an efficient and safe manner in which to move the goods between the different heights. However, one problem which is experienced is the ability to ensure that the weight of goods, particularly when loaded onto the goods storage area in the form of the vehicle trailer, meets safety regulations and requirements. This can be considered with respect to three known problems, a first problem is that the overall weight of the trailer is required to be within a certain limit to be regarded as being safe to be transported on the road whilst there are also pressures to maximise the filling and hence load of the vehicle. A second problem is with regard to the distribution of the load between the respective decks in the vehicle trailer so as to ensure that, for example, while the overall weight may be acceptable, the top deck is not laden with a particularly heavy load and/ goods and the lower deck is loaded with a lighter load and/or goods thereby making the trailer unstable and prone to tipping over. A third problem is with regard to the distribution of the load on a particular deck, typically the lower deck and with respect to the effect of the load of goods on the wheel axles of the trailer. It is found that if at a given time there is a heavy load over one axle and no, or a light load positioned over another axle of the trailer, the balance and pulling of the trailer can become erratic and potentially dangerous. This problem can occur as a result of the unloading of part of a load from the vehicle trailer such as to a first retail outlet which typically then leaves the majority of the weight of the remainder of the load in the trailer positioned over the front axle of the same as the unloaded goods are typically those which have been located nearest the exit, typically at the rear, of the trailer.

With regard to the first problem, the conventional solution is for the loaded trailer to be towed to a weigh bridge to ensure that the overall weight of the trailer is within the required limit. If it is found that the load of the trailer is over the limit, then the trailer is required to be returned to the warehouse for the removal of goods via the lifting apparatus which, at best, is inconvenient and, at worst, maybe difficult to achieve in relatively busy loading facilities. With regard to the second problem of ensuring the correct load allocation to respective decks, there is currently no known solution other than having to rely on the experience of the persons loading the trailer and also relay on their diligence to do so properly. With regard to the third problem, once again there is no known solution other than to rely on the operator redistributing the load on the deck when they feel that the same is unevenly distributed but, other than relying on experience and/or instinct there is no way of gauging this in an efficient manner.

The aim of the present invention is therefore to provide lifting apparatus which allows the detection and monitoring of the weight and/or load distribution of goods being moved into and or from a goods storage area using lifting apparatus.

In a first aspect of the invention, there is provided lifting apparatus for the movement of goods to and/or from a goods storage area, said lifting apparatus including a platform on which goods can be placed to allow the goods to be moved in a substantially vertical plane along with the platform to a required height for loading and/or unloading and wherein weight detection means are provided to allow the weight of the load placed on the platform to be detected.

In one embodiment, the weight detection means are provided to detect the weight of the load once placed onto the platform.

In one embodiment, the weighing of the load is performed by the weight detection means when the platform is stationery and/or once the platform is moving.

In one embodiment, the weighing of the load is performed when the platform is moving in a downward or upwards direction.

In one embodiment, when the platform is to be moved to a raised position for the unloading of the load of goods therefrom into the goods storage area, the weighing is performed. In one embodiment when the platform is to be moved downwardly for the unloading of the goods therefrom at least one portion of movement of the platform is in an upward direction for a sufficient duration so as to allow the weight detection means to detect the weight of the goods prior to the platform making its downward movement.

In one embodiment, the weight detection means includes means for monitoring a parameter of operation of the platform as it is being moved and processing means to process data relating to the said parameter received from the detection means to arrive at a value for the weight of the load on the platform at that instant.

In one embodiment, the parameter relates to the movement apparatus for the platform and in one embodiment, relates to the power exerted by a motor which drives the movement apparatus and/or if one or more hydraulic rams and/or driven cylinders are used as part of the movement apparatus, the parameter is that of the hydraulic pressure within the hydraulic ram system or another parameter of the movement of the ram or cylinder is detected.

Typically, the greater the value of the parameter which is detected, then the greater the weight of the load on the platform at that time will be, with the difference between the data related to the value of the parameter when the platform is empty and being moved and the parameter value when the platform is being moved and with a particular load thereon at that instant used to generate the value for the weight of the load.

In an alternative embodiment the weight detection means includes one or more load sensors on which the lifting apparatus is positioned. Typically said sensors are provided such that the weight of the apparatus with an empty platform is detected and the weight of the apparatus with a load thereon can be detected and the difference between the respective detected weights is the equivalent of the weight of the load on the platform at that time.

In one embodiment, the weight detection means includes processing means to provide the ability for the weights of respective loads for selected platform movements to be added together. This can be used so as to arrive at a value of the weight of the load on a particular deck or goods storage area, which has been loaded with goods from a number of platform loads.

In one embodiment, the weighing means includes input means for use by an operator of the lifting apparatus to allow various control levels to be set, for example, to indicate the start of loading of a particular goods storage area and/or deck of the goods storage area, the particular weight limits for the goods storage area and/or decks of the goods storage area and/or the selection of particular processing requirements for the detected load weight values.

In one embodiment, the weight detection means includes indicator means which can indicate the weight of each platform load and/or react to specific limits being reached with regard to a predetermined value.

In one embodiment, the indicator means may be visual and/or audible so as to provide a warning to the operator of the lifting apparatus, and/or include means to mechanically or electrically prevent movement of the lifting platform if a detected weight exceeds a particular predetermined value.

In one embodiment, when the platform is to be used to move goods onto first and second decks of the goods storage area and there are predetermined loading limits for each of the decks, the lifting apparatus can further include a sensing means to detect the height to which the platform is moved and hence which of the decks the platform is being moved to. In one embodiment, the sensing means are provided in one or more guide means along which the platform moves so as to detect when the platform reaches and passes a predetermined height on said guide means which would indicate movement of the platform to a deck higher than the location of the sensing means, and thereby allow the appropriate deck to be identified.

In one embodiment the weight detection means processing means compares the load on the platform with the difference between the weight limit for each of the decks of the goods storage area and the load weights which have already been placed on each of the respective decks and if the load on the platform exceeds or matches the said difference value of one or both of the decks the load on the platform is prevented from being unloaded onto said deck or decks. Typically the indication means also indicate the same to the operator of the apparatus.

In one embodiment the platform is provided to be moved along guide means and the movement is achieved via a plurality of flexible elongate members connected to the platform and the length of the respective members define the height of the platform at that time. In one embodiment the winding and unwinding of the members is achieved via at least one hydraulic ram.

In another embodiment the platform is provided to be vertically movable under the influence of a plurality of hydraulic rams, typically but not necessarily operated to cause movement of a scissor lift arrangement located under the platform and which, in turn, moves the platform which is supported thereon to provide vertical movement thereof. In one embodiment the hydraulic rams are required to be moved in a synchronized manner.

Typically it is the condition of the control system of operation of the ram or rams which is monitored in order to achieve an indication of the weight or load of goods on the platform at a given time and thereby allow the weight of the goods which are placed into a goods storage as a result of the unloading of the goods from the platform to be given a value.

In one embodiment when a single ram is used to provide the vertical movement of the platform digital sensing means can be provided to monitor the condition of the ram as it is operated to move the platform and hence the digital data received from the at least one sensor can be processed on site to provide the indication of the weight of the goods.

Alternatively, when multiple rams are required to be used to move the platform the monitoring of the same to determine the weight or load on the platform is more problematic but can be achieved by providing sensing means to monitor the condition of at least some, and more typically each, of the rams. Typically in this case the monitoring is achieved via analogue sensing means so as to determine the condition of each of the rams, and this analogue data is then combined and processed to give a value for the weight of the goods on the platform. It is found that this process requires significantly greater processing and hence processing power requirement but is required in order to ensure that an accurate weight value can be achieved for the goods which are held on the platform at that time.

In a further aspect of the invention there is provided weight detection apparatus for use with apparatus for the movement of loads of goods between respective goods storage areas, said apparatus including at least one platform on which the goods are moved in a vertical plane so as to bring the platform to the level of one or more floors of the respective goods storage areas between which the goods are to be moved, said weight detection means including means for monitoring the weight of a load of goods on the platform at any given time, processing means for providing a cumulative weight value for the goods which have been loaded into a goods storage area and/or onto one or more decks of a goods storage area and/or the distribution of the load on said one or more decks and control means to allow the control of movement of the platform with reference to the cumulative weight value and predetermined weight limits.

In one embodiment the weight detection apparatus provides a record or log of the weight of the load of goods which are carried in the trailer in any given trip and, if there are a number of decks in the trailer, preferably the distribution of the load between said decks and the record or log is available to be referred to subsequently.

In a yet further aspect of the invention there is provided a system for determining the weight of a load of goods placed into a transportable goods storage area or at least part thereof, said system including means to monitor the weight of the goods on the platform and thereby determine the weight of the goods which are loaded into the goods storage area and, if required, add successive loads unloaded from the platform into the goods storage area to provide a value of the goods in the goods storage area.

In one embodiment the weight value is for goods loaded onto a particular deck of the goods storage area and/or a weight value for the goods loaded into the entire goods storage area. In one embodiment means are provided to allow comparison with a predetermined limit.

In a further aspect of the invention there is provided a method of loading goods onto a deck or floor of a goods storage area using lifting apparatus including a platform, said method comprising the steps of loading goods on to the platform , if required, moving the platform to a height level of the deck or floor to move goods from the platform onto the deck or floor, repeating the steps if necessary until the deck or floor is loaded and wherein a weight value is determined for each platform load and the values for the number of loads placed onto the deck or floor and/or the goods storage area are added to provide a weight value for the load.

In one embodiment the said weight value for the load on the deck or floor is compared to a predetermined load weight limit for the deck or floor applicable at that time and if the detected weight value approaches or exceeds the predetermined load weight limit the movement of the platform with a load thereon is at least indicated as being unacceptable to the operator.

In one embodiment if the said weight value is less than the predetermined load weight limit the platform can be moved to the said deck with a load thereon if the weight of that load is less than the said difference between the weight value and the predetermined load weight limit.

In one embodiment the predetermined weight limit for each of the decks can change after the positioning of each load onto one of the decks. This allows the effects of the particular distribution of loads between the said decks to be taken into account during the loading process and ensure that the same are still loaded safely. For example, the predetermined value for an upper deck may be decreased if during loading all of the goods have been loaded thereon and nothing is loaded on the lower deck as that would represent a greater risk of the trailer toppling over than if the weight of the load on the lower deck was increased. Typically the alteration in the weight limits is performed using one or more algorithms into which the detected load weights are fed and processed to generate new maximum weight limits if required.

Typically, a calculation of the weight of load on the platform is performed every time the platform is moved.

In one embodiment the method includes the step of forming each load on the platform of a predesignated number of units and allocating each load with the detected weight. Furthermore the subsequent unloading of a quantity of the load as a particular delivery which is to be made can be calculated to have a known effect on the weight of the trailer thereafter as the weight of the number of unit loads which will be removed for that delivery is predetermined and hence the weight for the delivered load is known. In one embodiment each unit is a roll cage in which goods are held. In one embodiment each load comprises the number of units which when placed side by side form a row across the width of the deck on which the same are to be placed. In this embodiment the subsequent distribution of the loads and hence units across a floor or deck of the good storage area can be determined during the subsequent movement of the goods storage area and steps taken, if necessary to alert the operator of the vehicle to which the goods storage area is attached, of the need to move goods storage units at a certain time during the deliver cycle to ensure that the remaining load in the trailer is properly and safely distributed , typically with respect to the axles of the goods storage area. This is made possible by the fact that the weight of the overall load, the weight of the loads on each of the decks and the subdivision of the load on a deck into sub load weights of a known number of units is performed and identified during the initial loading of the goods by weighing the same as they are moved on the platform.

The present invention therefore provides a solution to the problems indicated previously, these being, to be able to identify the overall load in a goods storage area at a particular time and/or to identify particular loads on particular decks or floors within a goods storage area and/or identify the distribution of the load on a deck once a delivery cycle is in operation and during which a quantity of the load may be removed for a delivery to be made, thereby ensuring that the loading is safe and within predetermined limits. The apparatus also overcomes the problems which can be created when a platform is used to move goods of different weights at the same time and/or containers such as roll cages that can be moved onto and from the platform and which themselves can contain different weights of goods to be loaded into the goods storage areas. For example, it is possible that a goods storage area deck maybe filled with a first type of item which is relatively light and in which case the weight of the load on that deck will be light or, alternatively, maybe filled to the same extent but with goods that are relatively heavy such that the weight of the load on that deck may in fact exceed weight limits although the same volume is taken up. This can now be identified using the apparatus as herein described. The apparatus further avoids the need for any weighing apparatus to be installed in the goods storage areas themselves.

Specific embodiments of the invention are now described with the reference to the accompanying drawings wherein;
Figure 1 illustrates a schematic elevation of first and second goods storage areas and lifting apparatus in accordance with one embodiment of the invention;
Figure 2 illustrates lifting apparatus in accordance with one embodiment of the invention;
Figure 3 illustrates one embodiment of a display of the apparatus in accordance with the invention ;
Figures 4a- c illustrate apparatus in accordance with the invention in use with a transportable goods storage area;
Figure 5 illustrates schematically a hydraulic ram system which can be used to move the platform of the lifting apparatus in accordance with one embodiment;
Figures 6a-f illustrate a sequence of operation of the weight monitoring apparatus in accordance with one embodiment of the invention; and
Figures 7a-7o illustrate a loading sequence which can be followed utilising one embodiment in accordance with the invention.

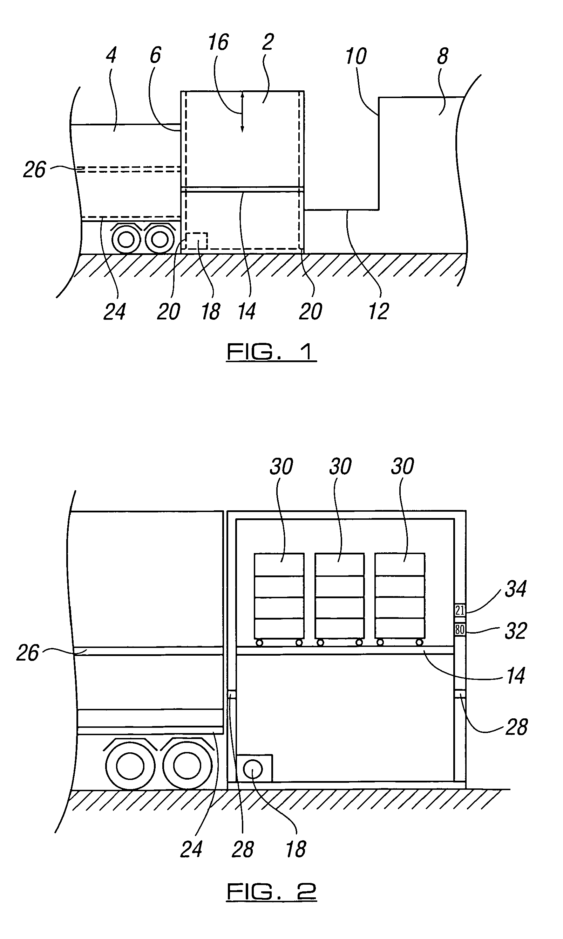

Referring firstly to Figure 1, there is illustrated lifting apparatus 2 in accordance with one embodiment of the invention. The lifting apparatus 2 is provided for use in loading and unloading of goods between first and second goods storage areas in the form, in this embodiment, of a vehicle trailer 4 with an open end 6 via which goods can be moved in to and from the trailer, and the goods storage area in the form of a warehouse 8 which has an opening 10 leading to a loading bay 12 and which is positioned to the opposing side of the lifting apparatus 2 from the vehicle trailer. The lifting apparatus includes platform 14 which is moveable in a vertical direction which is indicated by arrows 16. The platform is provided to be moved by appropriate movement means such as, for example, a series of elongate members, each of which are housed in a guide means 20 which are located around the platform and which guide the movement of the platform in the direction of arrow 16. The elongate members can be ropes, chains or the like and one end is typically located on the platform and the opposing end is typically located with a drive means such as one or more hydraulic rams 18. The operation of the hydraulic ram is controlled by a hydraulic fluid system and at least one motor which is provided connected to electrical power and so is able to drive the hydraulic ram and hydraulic system to move the platform as required.

In the embodiment shown, the vehicle trailer is provided with first and second decks 24, 26, which are vertically spaced and thereby allow goods to be moved onto and from each of the decks so that both decks can be loaded and unloaded.

With vehicle trailers, there is a need for the weight of the load in the vehicle trailer in total to be below a predefined level so as to allow the trailer to be safely towed on the road. Conventionally, in order to check that the weight of the load is below the required level, the trailer, once loaded, would be taken to a weigh bridge and the overall weight checked to be within the required limits. If the trailer was found to be above the required limit then the same would have to be returned to the loading bay and an appropriate amount of goods off loaded to ensure that the weight was then met. This is inconvenient and may cause significant delay in the transport of the goods.

In addition, there is also a need, in order for the movement of the trailer to be safe, for the particular location of the load to be safely distributed between the decks of the vehicle trailer. This is particularly the case when the goods are being loaded onto first and second spaced decks of the type shown and, at present, there is no known way of efficiently loading these decks whilst, at the same time, being able to ensure that the weight of the load on a particular deck, does not exceed the required limit for that overall load, and that particular deck with respect to the overall load and therefore does not provide a significant risk of the trailer toppling over during use.

In accordance with the current invention, the lifting apparatus, which is shown in more detail in Figure 2, is provided with means to detect the weight of a load on the platform.

In one embodiment, this is achieved by, first of all, moving a load of goods onto the platform. Typically the goods will be held in a plurality of roll cages 30, as shown. Once the platform has been loaded to a desired extent, the platform is moved to the level shown in Figure 2 which matches the level of deck 26 of the vehicle trailer. Preferably, the apparatus will include sensing means 28 which will detect whether the platform has been moved to the level of the first deck 24 or the level of the second, higher deck 26. This will allow the allocation of a particular load weight to each of the two decks. As the platform is raised, the power exerted by the motor to cause the movement of the platform to the raised position is detected and data generated to represent the power value. Processing means can then identify the differential between the power value to raise the platform with the load thereon and the power value to lift the platform when empty and the difference is then processed to generate a weight value which is equivalent to the weight of the load on the platform at the time of detection.

In one embodiment the entire deck 26 can be filled with all the goods held in the platform 14 at one time or alternatively, a number of platform loads are required to be moved onto the deck 26 in order to load the same. If it is the case that only one platform load is required to load the deck, then the weight of the load on that platform at that time can be identified and compared to a predetermined weight limit for that deck. If the load exceeds that weight limit then reallocation of the goods on that deck will be required or not all of the goods on the platform at that time will be loaded onto the deck. It should be noted that the predetermined weight limit may not necessarily be the maximum safe limit to be placed on the deck but rather another weight limit which is allocated with regard to the goods to be held on the trailer as a whole on that occasion so as to ensure that the trailer is safely loaded and the load safely allocated.

If the deck is to be filled with goods from a number of platform movements then the weight values for the load of each platform can be totalled so as to provide a total weight value for the loads which have been placed onto the particular deck and again an assessment made as to whether the weight is acceptable. This process can then be repeated for both decks and, in addition, the weights for both decks can be added to provide a final weight of the load in the vehicle trailer and this can in turn, be used to identify whether or not the overall weight of the trailer is acceptable.

Typically the weighing system will also include indication means such as a visible display which will identify the weight of the load on the platform at that time 34 and/or indicate 32 the total weight which is to be placed on a particular deck or floor. Furthermore, the indication means may include a visual or audible alarm which will indicate when the weight on a particular deck or floor has exceeded the predetermined parameter.

In one embodiment, the indication means, if it reaches its alarm condition, can also impact on the operation of the lifting apparatus so as to prevent the platform being moved with any subsequent loads to the particular level of the deck which is identified as being close to or exceeding the allowed level.

Thus, in accordance with the invention there is provided a method for loading a goods storage area and, in this example, the goods storage area being loaded is a vehicle trailer with two spaced decks. Firstly, a load is placed onto a platform from the goods warehouse, the platform is raised to raise the same to the level of the first deck and as it does so, a weight value is calculated. In this case, if a number of platform movements are required to move goods to a position to load the deck, the weight values for each of these platform movements is identified then the total weight calculated and compared with a predetermined parameter for that deck. If the weight value is below the parameter then loading commences of the other deck. However if the weight value exceeds the parameter then an alarm or other indication is generated which will then cause the platform to be raised to the deck once more and some goods be removed from the deck so as to bring the weight of the same below the parameter. The loading of the second deck is then repeated and the same process is followed as for the previous deck

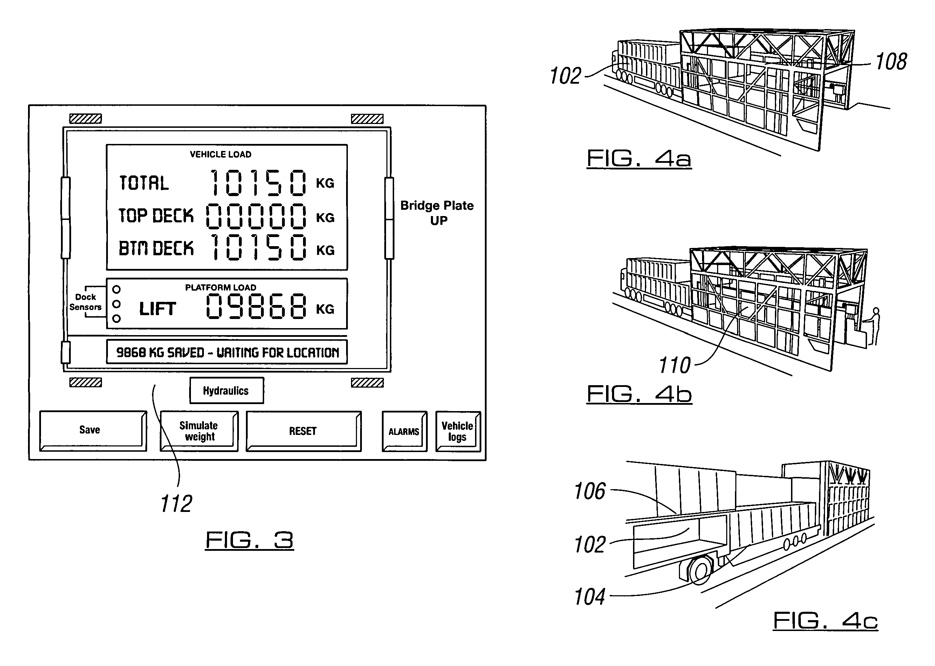

The apparatus for the monitoring of the weight in one embodiment is typically used to monitor the weight distribution on the decks of a transportable goods storage area 102 which has in this instance upper and lower decks 104, 106 as shown in Figures 4a-c. This monitoring is achieved on the platform 110 of the lifting apparatus 108 via which the goods are moved onto the decks and prevents the risk of overloading of the decks and hence the risk of vehicle rollover because of the overloading, particularly of the top deck. It also avoids the delays which can conventionally occur as the transportable goods storage area typically has to be taken, once loaded, to a weighbridge, and if the weight is too great, taken back for unloading. However frequently the unloading space may have been already occupied which means that further delay is caused. Conventionally this delay is attempted to be avoided by deliberately under loading the trailer in terms of its potential capacity so as to try and ensure that the trailer is not too heavy and therefore doesn't have to return to be unloaded. However the downside of this is that it means that the trailer is then operated under its potential capacity which costs money in transport costs due to the extra number of trips which are required to be performed in order to carry the goods.

Typically the particular weight levels for the trailer as a whole and the particular decks can be selected to suit particular legal requirements and or specific operator requirements and can be input at the start of operation via the user interaction with the display screen 112 shown in Figure 3.

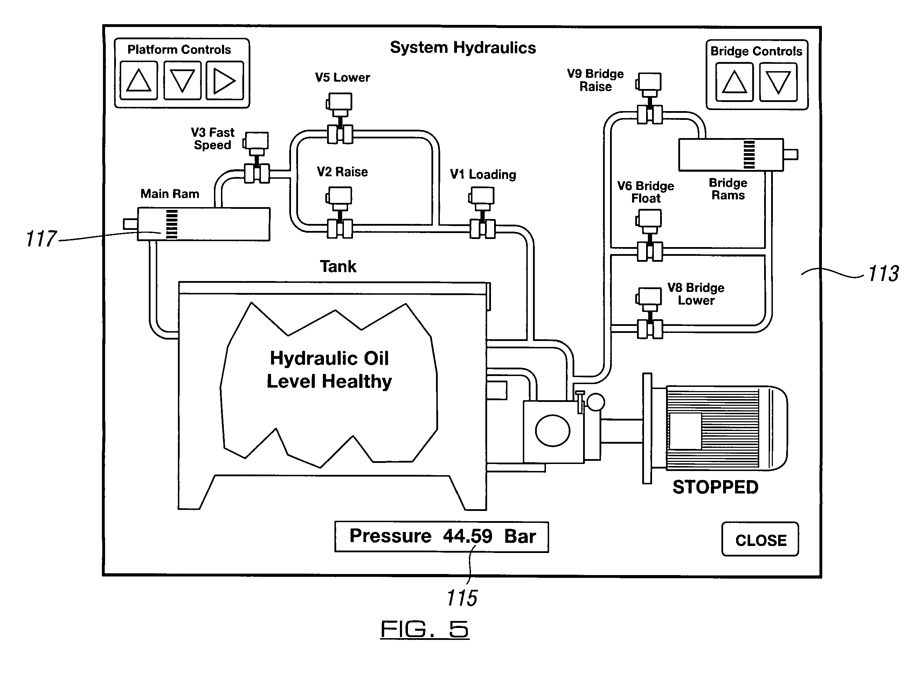

Figure 5 illustrates a layout of the monitoring system 113 which can be used for the platform of the lifting apparatus which is raised and lowered under the influence of a single platform ram 117 or multiple rams. Typically the condition of the system can be monitored so as to provide digital data indicative of the pressure 115 of the hydraulic fluid at that time, which in turn is indicative of the weight being lifted on the platform at the that time. The data can then be processed to indicate the weight of the goods which are on the platform at that given time. If a multi hydraulic ram system is used to move the platform then the condition of each of the hydraulic rams will typically be required to be monitored in order to allow the overall weight of the goods on the platform to be calculated.

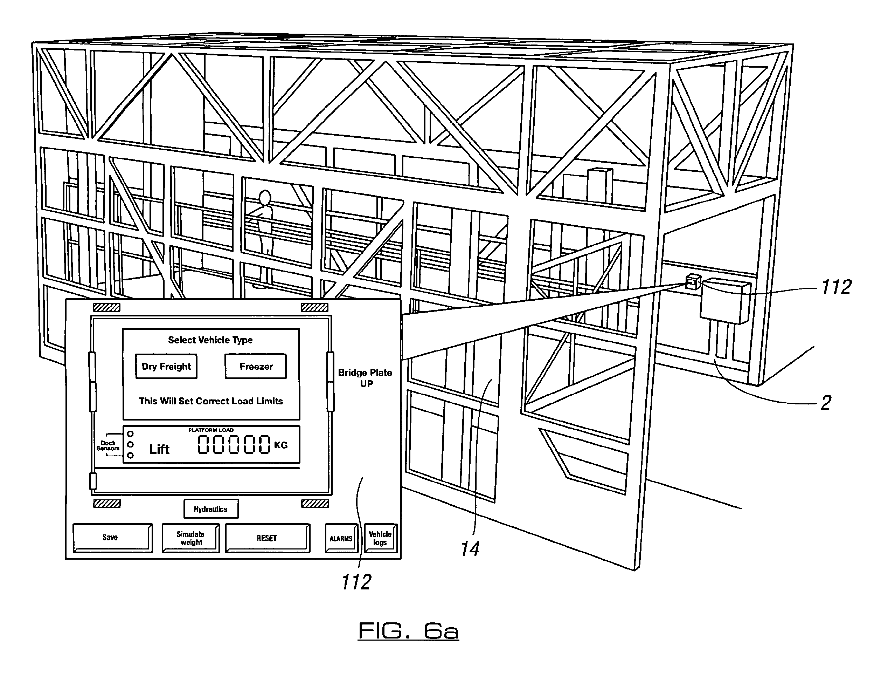

Figures 6a-f illustrate a sequence of user interactions with the display panel 112 and hence allow the weight monitoring apparatus to be utilized in the operation of the lifting apparatus and hence loading of the vehicle trailer 4 with reference to the particular trailer parameters. It should also be appreciated that if the load weight is exceeded then the unloading can be performed on site and therefore there is no need for the vehicle to be moved from the lifting apparatus to be weighed and then returned if overloaded as would conventionally be the case.

Typically the weight loading of each deck 26 and each trailer 4 can be kept and stored for a period of time after completion in order for the same to be referred to as and when required if., for example there is an accident and it needs to be shown that the trailer was correctly loaded.

The display panel 112 can also be operated to indicate events other than just relating to the load detection system. Other events could be any or any combination of gates not shut, safety edge activated, emergency stop activated or the like and be generally linked to providing safety indicators. The display 112 can also be utilized to show the operation of the hydraulic ram system as indicated in Figure 5 and thus, in addition to showing the weight detection, it can also be used to show other features of the system such as solenoid inputs, ram movements, warning alerts, oil pressure or the like.

In one embodiment one or more load cells are provided to react to a change of condition of the platform and/or system provided to operate the platform of the lifting apparatus and so provide data which can be processed to provide an indication of the weight of the goods on the platform at that time.

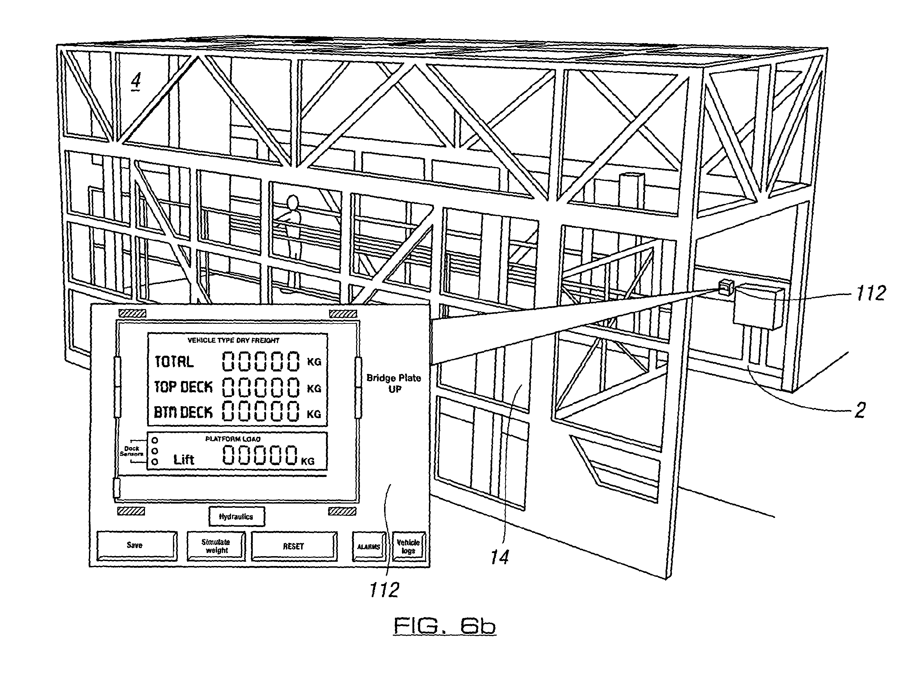

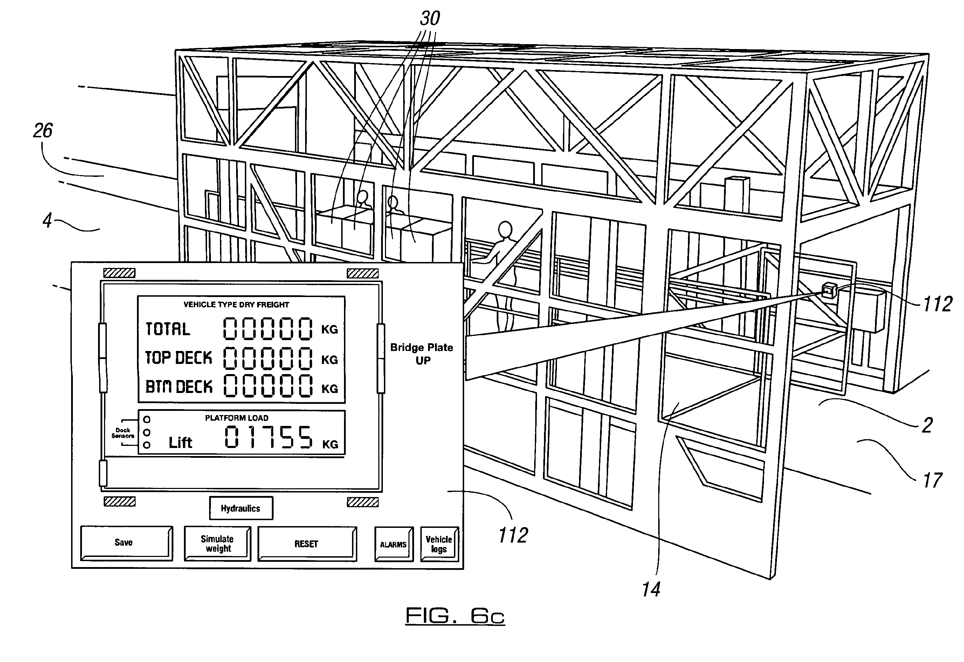

In Figure 6a the apparatus platform 14 is shown empty, as is the case in Figure 6b with the trailer 4 to be loaded provided at one end of the platform as shown. In Figure 6c the loading of the platform has commenced with a number of roll cage units 30 having being rolled onto the platform 14 from the loading dock 17 of a warehouse.

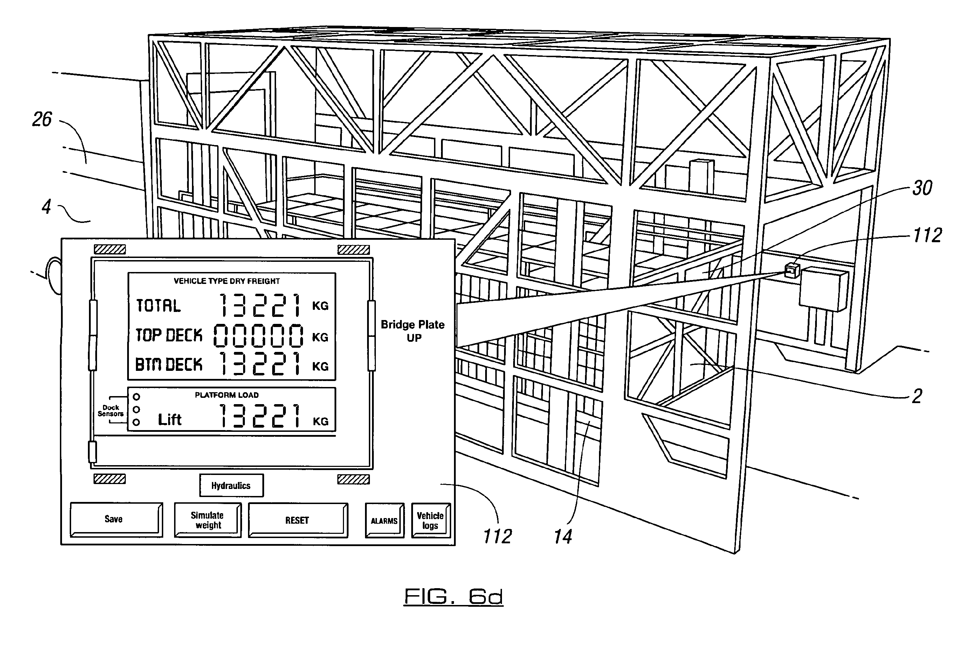

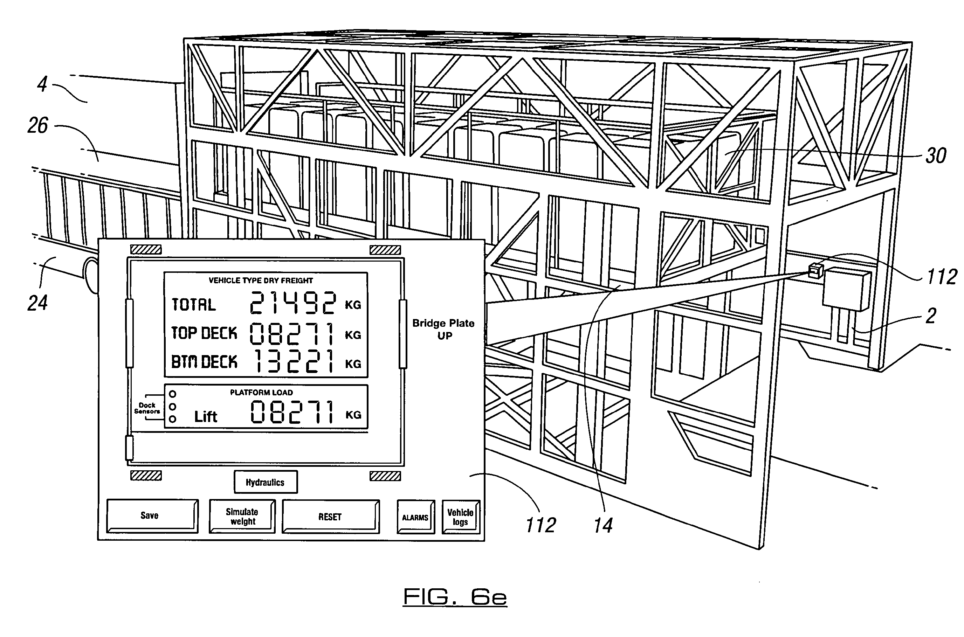

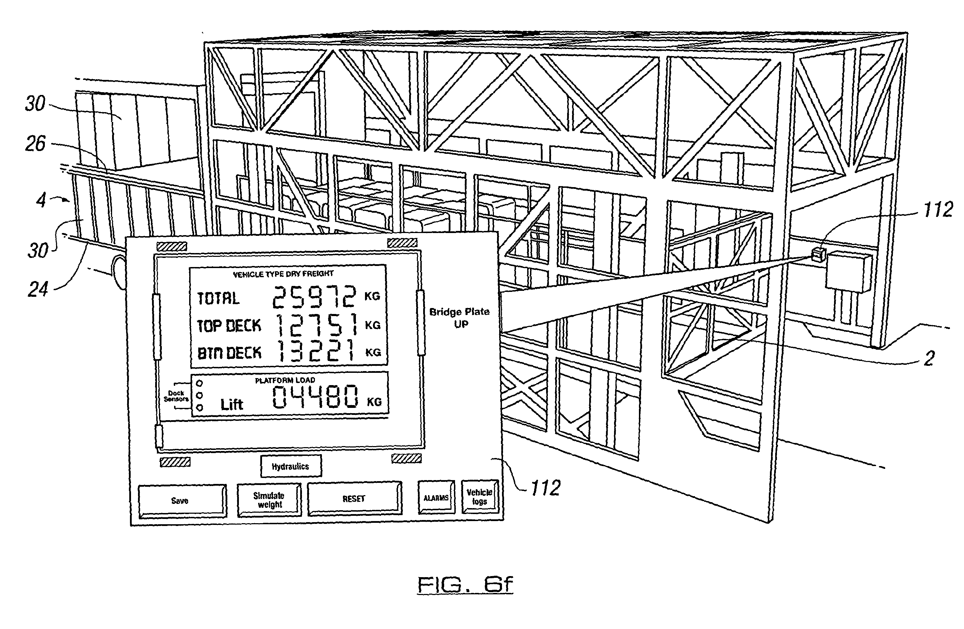

Figure 6d illustrates the platform filled with roll cage units 30 to form the total load which is to be moved onto the floor or deck 24 of the trailer 4 as shown in Figure 6e with the weight now on the lower deck indicated on the display 112. Figure 6f illustrates the movement of further loads in the form of series of roll cage units 30 onto the deck 26 via the platform 14 and the use of the weight detection means to alter the weight of the load on the top deck accordingly.

In one embodiment in addition to knowing the weight of the load on each deck, the load is placed onto the deck in "sub loads, and the weight of each "sub load" is detected. Typically each "subload" will comprise the same number of roll cage units 30, say, for example , 3 roll cages. Each sub load is then placed onto the deck, typically with particular relevance to the deck 24, in sequence. Once fully loaded and trailer 4 is being transported it can often be the case that the vehicle will stop to cause the delivery of parts of the load, with the sub loads positioned nearest the rear of the trailer and hence nearest the exit being the first to be unloaded. The load which is unloaded will be known to comprise a number of subloads and will be predetermined. This means that at the time of loading a calculation can be made as two which of the subloads will be unloaded first and what the total of that unloaded weight will be. If the weight value is relatively small in comparison to the weight of the load remaining on the trailer then it will have no significant effect on the trailer on its onward journey. However if the unloaded weight is relatively large it can mean that the remaining load is so unevenly distributed along the deck 24 that there is a significant weight on only one of the axles, i.e. the front wheel axle and none or very little weight on the rear axles which can lead to the trailer being difficult to move and control. Thus, in accordance with the invention, at the time of loading a prediction is performed by the weight detection means processing means as to whether there is a possibility of a load distribution problem during delivery and, if so, will generate a warning to the driver of the vehicle to which the trailer is attached, that following a particular unloading of part of the load, they will have to redistribute the load across the deck to ensure the safety of the onward journey.

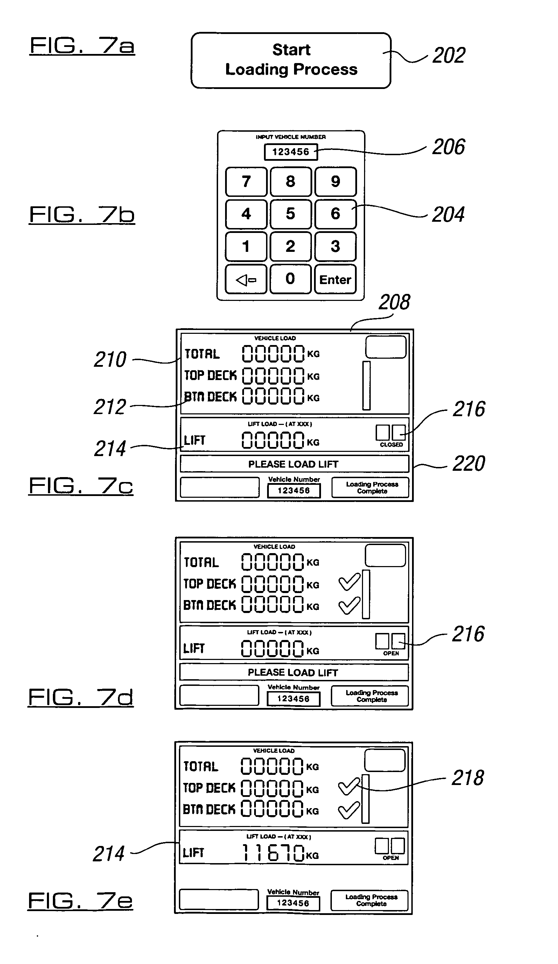

A loading sequence for lifting apparatus incorporating the weighing means in accordance with one embodiment of the invention is described in Figures 7a-o illustrate a loading sequence which can be followed to load a goods storage area in the form of a vehicle trailer with a first floor or deck and a second floor or deck spaced vertically from the first. The aim is to safely load both decks whilst at the same time maximising the use of the storage space which is available. The figures illustrate a screen display which is provided as apart of the loading apparatus and which provides loading information to the user of the apparatus in the following manner.

Figures 7a and b illustrates two displays which require user interaction to initiate the loading process, with Figure 7a providing the ability for the operator to start the process via display 202 and Figure 7b requiring an identification code to be input via keys 204 to generate the code 206 and hence allow the loading sequence to be linked and be traceable thereafter, to a particular goods storage trailer and hence vehicle. Figures 7c and d illustrate the display screen at the start of the sequence and provide an entry 208 which will indicate the total weight in the storage area and entries, 210,212 which indicate the weight of the loads on the respective decks in the goods storage area. A further entry 214 indicates the weight of the load on the platform of the apparatus at that time and display 216 indicates whether the access gates which allow access to the platform are open or closed.

When the apparatus is ready to be used a message 220 is generated to indicate that loading should start, the gates are opened by the operator to cause a change in condition of display 216 as shown in Figure 7d.

A load is then moved onto the platform and the display 214 changes to indicate the weight of the load thereon. The display also then generates further indication means 218 to indicate whether at that time the load on the platform can be placed on both, one or neither of the decks due to the weight already placed thereon and with reference to predetermined weight restriction parameters of the storage area. In this case a tick indicates that the load on the platform can be placed on the deck and a no-entry sign indicates that it can't be placed onto the deck for which the sign is displayed. Furthermore, when a cross is generated, the movement of the platform to the deck at which the cross is displayed is not possible.

As shown in Figure 7e the load on the platform can be moved onto either of the decks.

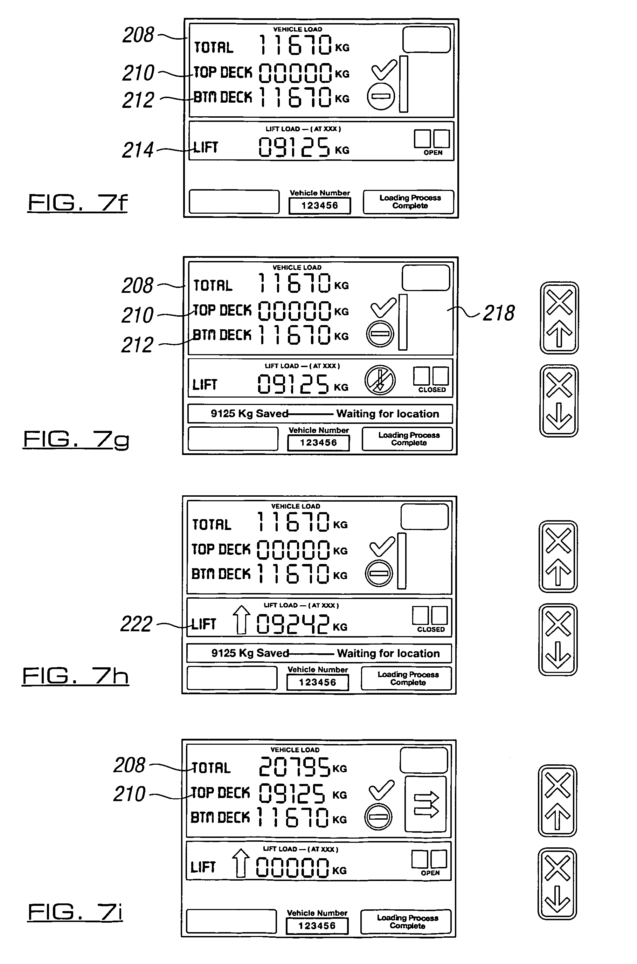

Turning now to Figure 7f, the load from the platform of Figure 7e has been loaded onto the bottom deck which causes the weight indicated for that deck 212 to be changed on the display as is the total weight indication 208. A further load is now placed on the platform as indicated by the display 214 .The weight value for the platform 214 is added to the weight values for the bottom and top decks 210,212 and the total value for each deck compared with a predetermined weight for each of the decks. It should be appreciated that the predetermined values for each deck may change after each load as, in addition to not exceeding the total weight limit, the load values for each deck can be changed depending on the weight on each of the decks at that time so as, for example, to prevent too much weight being placed on the top deck such as to potentially cause the trailer to topple over. In the example shown the new platform load is deemed to be too great for the bottom deck and therefore the no entry sign is displayed against the bottom deck in Figure 7g. It is also the case that after each load has been placed onto the platform the gates are closed and the weight on the platform is calculated and then it is determined which decks, if any, the load can be placed onto. In Figure 7h the platform is shown by arrow 222 as being moved upwards and Figure 7i illustrates that the load has been moved onto the top deck and the weight value 210 and total value 208 are changed accordingly.

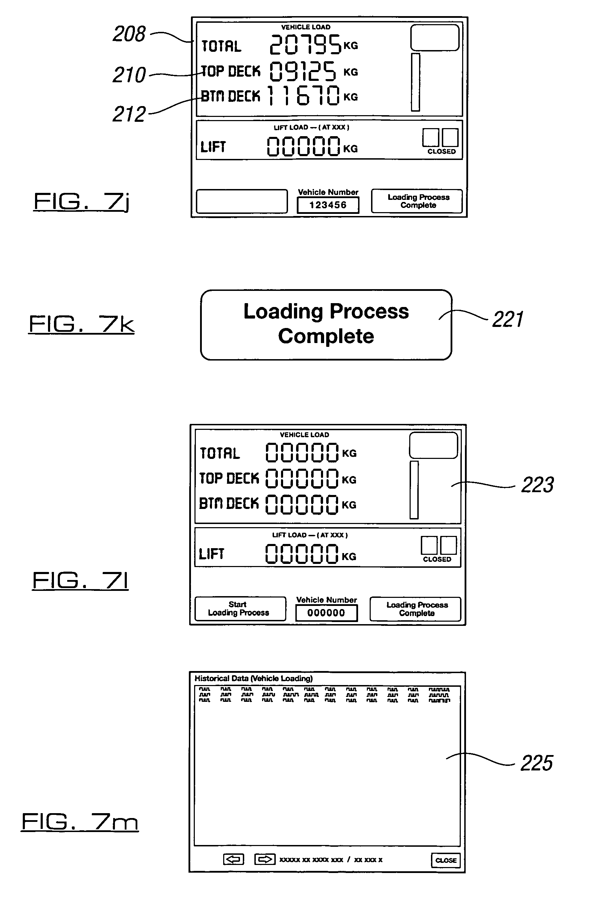

In this example, the top and bottom decks are now loaded and the operator can be certain that the loads on each of the decks and in the goods storage area of the trailer as a whole are within predetermined permissible weight values with the actual load values being indicated in Figure 7j. The operator then finishes the loading sequence via the display 221 of Figure 7k and this causes the timings for the loading to be calculated and also values to be zeroed as shown in the display 223 of Figure 7l. In addition, the system allows a record 225 to be generated as shown in Figure 7m which allows the start and finish time of the loading sequence, the loads and where the loading took place to be saved and allocated to the particular hoods storage trailer so that it can be proven that the trailer was safe to be transported as well as allowing other processing of the data to be performed.

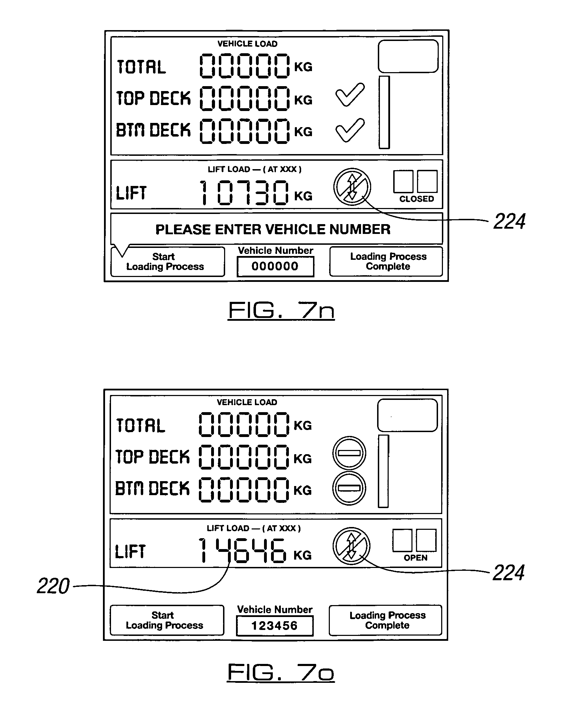

Figures 7n and o illustrate possible displays which may be created to alert the operator to specific problems, such as, in Figure 7n no vehicle code has been entered which means that the platform is not movable until corrected as indicated by display 224. In Figure 7o the weight value 220 for the load placed on the platform exceeds the predetermined weight limit for both of the top and bottom decks which means that the platform is not permitted to be moved until the weight of the load thereon is reduced.

It should be appreciated that the apparatus can be used whether or not the vehicle trailer includes one or more decks to be loaded and the weighing system reference levels can be altered accordingly by the operator.

## Claims

1. Lifting apparatus for the movement of goods to and/or from a goods storage area, said lifting apparatus including a platform on which goods can be placed to allow the goods to be moved in a substantially vertical plane along with the platform to a required height for loading and/or unloading and wherein weight detection means are provided to allow the weight of the load placed on the platform to be detected.

2. Apparatus according to claim 1 wherein the weighing means are provided to detect the weight of the goods once placed onto the platform.

3. Apparatus according to claim 1 wherein the weighing of the goods is performed by the weighing means once the platform is moving.

4. Apparatus according to claim 3 wherein when the platform is to be moved to a raised position for the unloading of the goods therefrom, the weighing is performed and, when the platform is to be moved downwardly for the unloading of the goods therefrom at least one portion of movement of the platform is in an upward direction for a sufficient duration so as to allow the weighing means to detect the weight of the goods prior to the platform making its downward movement.

5. Apparatus according to claim 1 wherein the weighing means includes detection means for monitoring a parameter of operation of the platform as it is being moved and processing means to process data from the detection means relating to the said parameter to arrive at a value for the weight of the load on the platform at that instant.

6. Apparatus according to claim 5 wherein the greater the value of the parameter which is detected, then the greater the weight of the load on the platform at that time and the difference between the data related to the value of the parameter when the platform is empty and being moved and the value of the parameter when the platform is being moved and loaded with a particular load at that instant, is used to generate the value for the weight of the load.

7. Apparatus according to claim 1 wherein the weight detection means includes one or more load sensors on which the lifting apparatus is positioned.

8. Apparatus according to claim 1 wherein said load sensors are provided such that the weight of the apparatus with an empty platform is detected or known and the weight of the apparatus with a load thereon is detected and the difference between the respective detected weights is the equivalent of the weight of the load on the platform at that time.

9. Apparatus according to claim 1 wherein the weight detection means allows the weights of respective loads on the platform to be added together to provide a value of the weight of the load which is moved onto a particular deck or floor of a goods storage area.

10. Apparatus according to claim 1 wherein the weight detection means includes input means for use by the operator of the lifting apparatus to allow control levels to be set.

11. Apparatus according to claim 1 wherein the apparatus includes indicator means which can indicate the weight of each platform load and/or react to specific limits being reached with regard to a predetermined weight value.

12. Apparatus according to claim 11 wherein the indicator means mechanically and/or electrically prevent movement of the lifting platform at all and/or to a specified deck if a detected weight on the platform exceeds a predetermined weight.

13. Apparatus according to claim 11 and/or 12 wherein the indicator means mechanically and/or electrically prevent movement of the platform if a detected load weight on the platform would bring the weight of the load on a deck or floor towards which the platform is being moved to a value which would exceed a predetermined value.

14. Apparatus according to claim 13 wherein there are predetermined loading limits for each of the decks and said loading limits are altered during the loading of goods onto the decks to take into account the particular load on each of the decks at that time and the effect that has on the possible load weight limits for the other of the decks.

15. Apparatus according to any of claims 13-14 wherein the lifting apparatus includes sensing means to detect the height to which the platform is moved and hence which of the decks the platform is being moved to.

16. Apparatus according to any of the preceding claims wherein processing means perform a calculation of the weight of load on the platform is performed every time the platform is moved.

17. Apparatus according to claim 1 wherein the platform is provided to be moved along guide means and the movement is achieved via a plurality of flexible elongate members connected to the platform and the length of the respective members define the height of the platform at that time with said members being wound and unwound via at least one hydraulic ram.

18. Apparatus according to claim 1 wherein the platform is provided to be vertically movable under the influence of a plurality of hydraulic rams to cause movement of a scissor lift arrangement located under the platform and which, in turn, moves the platform which is supported thereon to provide vertical movement thereof.

19. Apparatus according to any of the claims 17-18 wherein the condition of the control system of operation of the ram or rams is monitored in order to achieve an indication of the weight or load of goods on the platform at a given time and thereby allow the weight of the goods which are placed into a goods storage area as a result of the unloading of the goods from the platform to be given a value.

20. A system for determining the weight of a load of goods placed into a transportable goods storage area or at least part thereof, said system including means to monitor the weight of the goods on the platform and thereby determine the weight of the goods which are loaded into the goods storage area and, if required, add successive loads unloaded from the platform into the goods storage area to provide a value of the goods in the goods storage area.

21. A system according to claim 20 wherein the weight value is for goods loaded onto a particular deck of the goods storage area and/or a weight value for the goods loaded into the entire goods storage area and the weight value is compared with a predetermined limit.

22. Weight detection apparatus for use with apparatus for the movement of loads of goods between respective goods storage areas, said apparatus including at least one platform on which the goods are moved in a vertical plane so as to bring the platform to the level of one or more floors of the respective goods storage areas between which the goods are to be moved, said weight detection means including means for monitoring the weight of a load of goods on the platform at a given time, processing means for providing a cumulative weight value for the goods which have been loaded into a goods storage area and/or onto one or more decks of a goods storage area and/or the distribution of the load on said one or more decks and control means to allow the control of movement of the platform with reference to the cumulative weight value and at least one predetermined weight limit.

23. Apparatus according to claim 22 wherein the weight detection apparatus provides a record or log of the weight of the load of goods which are carried in the trailer in any given trip and, if there are a number of decks in the trailer, the distribution of the load between said decks and the record or log is available to be referred to subsequently.

24. A method of loading goods onto a deck or floor of a goods storage area using lifting apparatus including a platform, said method comprising the steps of loading goods on to the platform , if required, moving the platform to a height level of the deck or floor to move goods from the platform onto the deck or floor, repeating the steps if necessary until the deck or floor is loaded and wherein a weight value is determined for each platform load and the values for the number of loads placed onto the deck or floor and/or the goods storage area are added to provide a weight value for the load.

25. A method according to claim 24 wherein the said weight value for the load on the deck or floor is compared to a predetermined load weight limit for the deck or floor applicable at that time and if the detected weight value approaches or exceeds the predetermined load weight limit the movement of the platform with a load thereon is at least indicated as being unacceptable to the operator.

26. A method according to claim 25 wherein if the said weight value is less than the predetermined load weight limit the platform can be moved to the said deck with a load thereon if the weight of that load is less than the said difference between the weight value and the predetermined load weight limit.

27. A method according to claim 24 wherein the predetermined weight limit for each of the decks is checked and may be changed after the positioning of each load onto one of the decks.

28. A method according to any of claims 24-27 wherein a calculation of the weight of load on the platform is performed every time the platform is moved.

29. A method according to claim 24 wherein the particular load weights which have been placed on each of the respective decks are totalised so as to allow the load weights for each of the decks and/or the totalised load weight for the goods storage area to be compared to a predetermined limits and, if exceeded, or the level is being approached, to indicate the same to the operator of the apparatus.

30. A method according to claim 24 wherein the load on the platform comprises a known number of load units and the detected weight is allocated to that particular load, to allow the loads with a known number of units to be subsequently used in determining the distribution of the load units on the deck during delivery of goods from the load.
